# DEMANDE DE BREVET EUROPEEN

(11) **EP 1 672 921 A1**
(43) Date de publication de la demande: **21.06.2006**
(21) Numéro de dépôt: 04405783.4
(22) Date de dépôt: 19.12.2004
(51) Int. Cl.: H04N 5/65, G09F 13/12, G06F 1/16

(54) **Cache pour écran plat**

(71) Demandeur: Feissli, Rémy, 1800 Vevey (CH)
(72) Inventeur: Feissli, Rémy, 1800 Vevey (CH)
(74) Mandataire: Cronin, Brian Harold John

(57) **Abrégé**

Un cache-écran d'un écran plat (7B) entouré d'un cadre-support (7), notamment un écran plat mural du type à cristaux liquides (LCD) ou plasma, comporte un verre-miroir (2) monté dans un cadre (1) adapté aux dimensions de l'écran et susceptible d'être solidarisé au ou retenu sur le cadre-support (7) avec le verre-miroir disposé contre l'écran plat (7B). Le verre-miroir (2) porte une couche réfléchissante laquelle laisse passer la lumière émise par l'écran plat (B) quand celui-ci est allumé, et forme un miroir réfléchissant qui cache parfaitement l'écran plat (7B) quand celui-ci est éteint. En outre, le verre-miroir (2) protège l'écran de toute atteinte accidentel.

## Description

### Domaine de l'invention

Cette invention se rapporte aux écrans plats où l'écran est entouré d'un cadre-support, en particulier un écran plat mural du type à cristaux liquides (LCD) ou plasma destinés à la diffusion des images par télévision.

### Arrière plan de l'invention

Aujourd'hui, l'écran plat est en train de remplacer le téléviseur traditionnel. Dans le passé diverses solutions existaient pour cacher le téléviseur lorsqu'il n'était pas utilisé. Par exemple, on dissimulait le téléviseur dans un meuble permettant de regarder des émissions lorsque la porte du meuble était ouverte. On a aussi proposé de recouvrir l'écran d'un téléviseur d'une pellicule à effet miroir. Toutefois ceci n'a pas donné un résultat adéquat et cette solution n'a pas été répandue.

L'écran plat est soit supporté sur un socle, soit placé contre un mur. Surtout pour l'écran plat mural, il serait souhaitable de pouvoir mieux l'intégrer dans l'ambiance de l'habitat lorsque l'écran n'est pas allumé.

### Résumé de l'invention

Cette invention a pour but de répondre au besoin précité.

Selon son aspect principal, l'invention propose un accessoire cache-écran pour un écran plat entouré d'un cadre-support, notamment un écran plat mural du type à cristaux liquides (LCD) ou plasma. Le cache-écran comporte un verre-miroir en rapport aux dimensions de l'écran plat et qui de préférence est placé dans un cadre qui vient entourer le cadre-support de l'écran plat. Ce verre-miroir avec son cadre est agencé pour être solidarisé au ou retenu sur le cadre-support avec le verre-miroir disposé contre l'écran plat. Le verre-miroir est pourvu d'une couche réfléchissante laquelle, lorsque le verre-miroir est disposé contre l'écran plat, laisse passer la lumière émise par l'écran plat quand celui-ci est allumé, et forme un miroir réfléchissant qui cache parfaitement l'écran noir quand celui-ci est éteint. En outre, le verre-miroir offre une protection physique anti-choc et protège l'écran plat, qui est en matière souple, de toute atteinte accidentel.

D'autres caractéristiques de l'invention sont exposées dans les revendications et dans la description qui suit.

### Brève description des figures

L'invention sera mieux comprise grâce à la description qui va suivre et qui se réfère aux dessins annexés donnés à titre d'exemples, dans lesquels:
- la figure 1 est une vue en éclaté et en perspective des éléments constitutifs d'une forme d'exécution de l'accessoire cache-écran selon l'invention avec son cadre partiellement coupé; et
- la figure 2 est une vue en perspective montrant comment l'accessoire cache-écran selon l'invention est placé sur un écran plat mural.

### Description detaillée

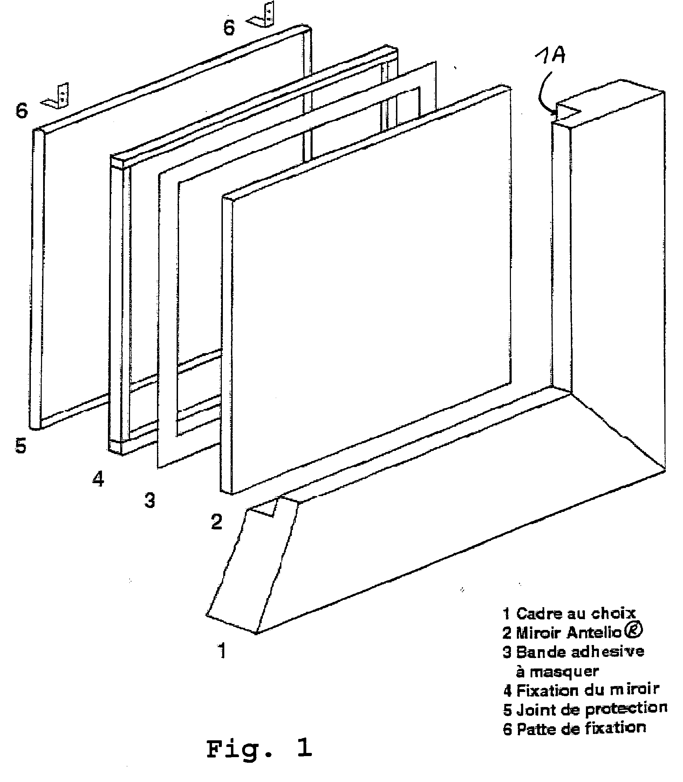

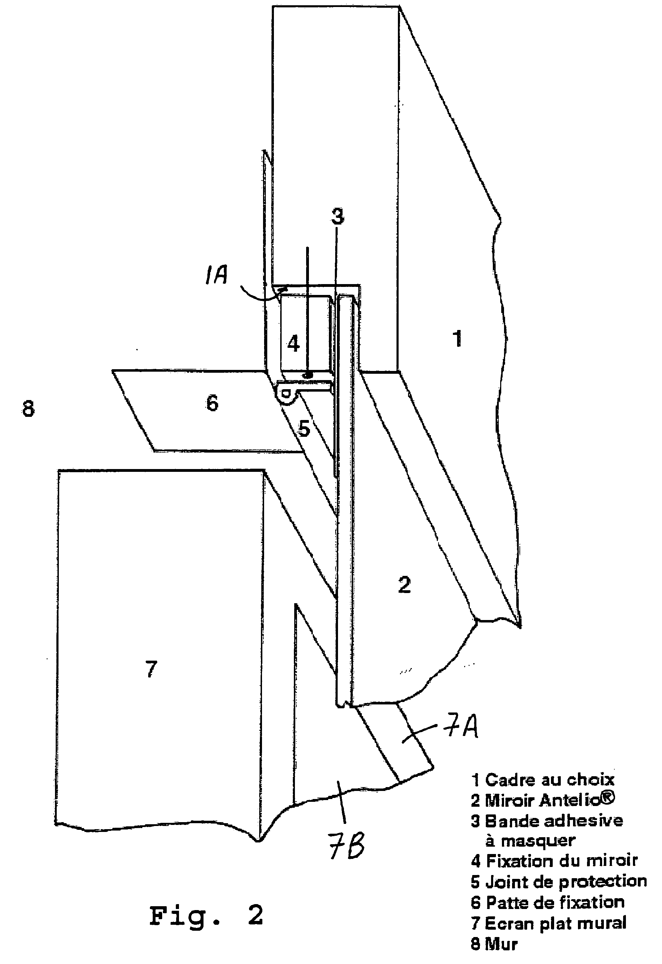

On voit sur la figure 1 les éléments principaux d'un cache-écran selon l'invention. Le cadre 1 est du type usuel pour encadrer des oeuvres d'art. Il peut être fabriqué en bois, métal, matière synthétique ou tout autre matériau adéquat et sa surface externe aura tout aspect voulu, peint, vernis, doré, etc. Comme il est usuel, il comporte une rainure périphérique 1A dite « battue » formant un épaulement destiné à recevoir le verre-miroir 2 ainsi qu'un cadre interne 4 dit « contre-battue » qui vient s'insérer dans la rainure 1A pour la fixation de la glace-miroir 2. Une bande adhésive noire de protection 3 de forme rectangulaire et dont les dimensions externes correspondent à celles du verre-miroir 2 est collée sur la face arrière de celle-ci. La partie externe de la bande 3 vient donc entre le bord du cadre 1 et la face externe de la glace-miroir 2, alors que la partie interne de la bande 3 vient recouvrir la face frontale 7A du cadre support 7 d'un écran plat mural 7B (figure 2) fixé sur un mur 8. Le format intérieur de la bande 3 correspond au format de l'écran lumineux 7B. Cette bande noire 3 sert à cacher les reflets parasites occasionnés par la carrosserie.

Le cache-écran illustré comporte en outre un joint de protection 5 en matière souple, de forme rectangulaire ou composé de parties rectilignes, qui vient s'interposer entre le cadre interne 4 et les bords du cadre-support 7. D'ailleurs, ce joint constitue une barrière ultime contre la pénétration de la lumière ambiente, ainsi que les poussières, vers l'écran plat 7B. L'accessoire cache-écran est complété par deux pattes de fixation 6 en forme de L qui seront vissées sur l'arrière de la partie supérieure du cadre 1, pour venir s'appuyer contre le haut du cadre-support 7 de l'écran plat 7B, de préférence avec un élément ou surface de protection anti-glisse interposé. De cette manière le cache-écran assemblé vient simplement se poser sur le cadre-support 7, le cadre 1 venant entourer la partie avant du cadre-support 7.

Lorsque le cache-écran est monté, on ménage un espace minimum d'environ 2 à 5 mm entre la face interne du verre-miroir 2 et la face frontale de l'écran plat 7B, ceci en conséquence de la carrosserie de l'écran. Cependant, il n'est pas exclu que le verre-miroir 2 puisse toucher l'écran .

La face externe du verre-miroir 2 est recouverte d'une couche réfléchissante qui pourrait par exemple être un dépôt métallique pyrolisé. De telles verres sont disponibles dans le commerce et sont utilisées, entre-autre, pour des façades de bâtiments. De bons résultats ont été obtenus avec un verre SGS Antelio® commercialisé par Saint-Gobain. Son épaisseur serait par exemple entre 4 et 8 mm; une épaisseur de 6 mm a donné de bons résultats. La couche réfléchissante peut être choisie parmi les produits disponibles pour assurer un taux de reflexion adéquat.

Les dimensions du cache-écran et son verre-miroir 2 seront bien entendu adaptées aux dimensions de l'écran plat 7B. Les écrans plats actuellement commercialisés vont de 15 pouces (environ 30x20 cm) jusqu'à 50 pouces (environ 125x70 cm) avec différents rapports largeur/hauteur. Il est donc possible de confectionner le cache-écran selon l'invention « sur mesure » ou en series selon des grandeurs qui correspondent à ceux des écrans plats. Par l'utilisation de bandes adhésives 3 de largeurs différentes, il sera possible d'adapter un cache-écran d'une certaine grandeur à des écrans-plats de plusieurs grandeurs différentes.

Lorsque le cache-écran est monté sur le cadre-support 7 avec son verre-miroir 2 disposé contre l'écran plat 7B, le verre-miroir 2 laisse passer la lumière émise par l'écran plat 7B quand celui-ci est allumé, et forme un miroir réfléchissant qui cache parfaitement l'écran plat 7B et son cadre-support 7 quand l'écran plat 7B est noir en étant éteint.

Donc, lorsque l'écran plat est éteint, le verre-miroir 2 dans son cadre 1 a l'apparence et la fonction d'une glace de haute qualité et dissimule parfaitement l'écran plat 7B et son cadre-support 7. Une personne qui ne connaît pas l'existence de l'écran plat 7/7A/7B ne pourrait pas deviner qu'un écran plat est caché derrière la glace. Lorsque l'écran plat 7B est allumé, la luminescence émise par l'écran de type à cristaux liquides (LCD) ou plasma sera transmise à travers le verre-miroir 2 pour diffuser une image impeccable. L'image sera même améliorée car le verre-miroir adoucit la saturation des pixels numérisés. Celui qui regarde l'écran allumé ne pourrait pas deviner que l'écran encadré deviendra un miroir lorsque l'écran plat sera éteint.

La présente invention répond donc au besoin de pouvoir bien intégrer un écran plat dans l'ambiance de l'habitat lorsque l'écran n'est pas allumé.

La forme d'exécution décrite est donnée à titre d'exemple et de nombreuses variantes sont possibles dans le cadre de l'invention.

Par exemple on peut envisager un écran plat entouré d'un cadre-support, notamment un écran plat mural du type à cristaux liquides (LCD) ou plasma, qui comporte un verre-miroir adapté aux dimensions de l'écran plat et posé sur ou solidarisé au cadre-support avec le verre-miroir disposé contre l'écran plat. Dans ce cas le verre-miroir pourrait être incorporé dans le cadre-support de l'écran plat lors de sa fabrication.

La bande adhésive 3 pourrait être remplacée par une métallisation ou une bande appliquée par sériegraphie. Afin de ne pas compromettre la télécommande de l'écran plat, la bande 3 peut comporter, à un endroit qui correspond à l'emplacement sur le cadre-support 7 d'un élément de contrôle de l'écran plat par télécommande, au moins une ouverture pour laisser passer la lumière infra-rouge ou autres ondes électromagnétiques de la télécommande.

Il est possible d'utiliser d'autres verres-miroirs ou verres teints disponibles dans le commerce et d'autres procédés de revêtement comme la déposition sous vide (« sputtering ») avec divers métaux tels l'argent, l'aluminium, le titane, etc. ou des oxydes de métaux.

## Revendications

**1.** Accessoire cache-écran d'un écran plat entouré d'un cadre-support, notamment un écran plat mural du type à cristaux liquides (LCD) ou plasma, **caractérisé en ce qu'**il comporte un verre-miroir adapté aux dimensions de l'écran plat et susceptible d'être solidarisé au ou retenu sur le cadre-support avec le verre-miroir disposé contre l'écran plat, le verre-miroir ayant une couche réfléchissante laquelle, lorsque le verre-miroir est disposé contre l'écran plat, laisse passer la lumière émise par l'écran plat quand celui-ci est allumé, et forme un miroir réfléchissant qui cache parfaitement l'écran plat quand celui-ci est éteint.

**2.** Accessoire cache-écran selon la revendication 1, qui comporte un cadre agencé pour entourer le cadre-support de l'écran plat.

**3.** Accessoire cache-écran selon la revendication 2 comportant un élément de fixation du verre-miroir contre son cadre, et un joint souple destiné à être interposé entre ledit élément de fixation et le cadre-support de l'écran plat.

**4.** Accessoire cache-écran selon la revendication 2 ou 3, comportant des moyens permettant de poser ou retenir l'accessoire sur le cadre-support.

**5.** Accessoire cache-écran selon la revendication 5, où lesdits moyens comportent une ou plusieurs pattes de fixation sur la partie supérieure arrière du cadre qui viennent se poser sur le cadre-support de préférence avec un élément ou surface antifriction interposé.

**6.** Accessoire cache-écran selon l'une des revendications précédentes où le côté du verre-miroir destiné à être disposé contre l'écran plat est entouré d'une bande opaque, notamment une bande adhésive, qui vient cacher le pourtour du cadre-support.

**7.** Accessoire cache-écran selon la revendication 6 où ladite bande opaque comporte, à un endroit qui correspond à l'emplacement sur le cadre-support d'un élément de contrôle par télécommande de l'écran plat, au moins une ouverture pour laisser passer les ondes d'une télécommande.

**8.** Accessoire cache-écran selon l'une des revendications précédentes, où la couche réfléchissante est disposée sur la face externe du verre-miroir.

**9.** Accessoire cache-écran selon l'une des revendications précédentes, où la couche réfléchissante est un dépôt métallique, notamment un dépôt métallique pyrolisé.

**7.** Ecran plat entouré d'un cadre-support, notamment un écran plat mural du type à cristaux liquides (LCD) ou plasma, **caractérisé en ce qu'**il comporte un verre-miroir adapté aux dimensions de l'écran plat et posé sur ou solidarisé au cadre-support avec le verre-miroir disposé contre l'écran plat, le verre-miroir ayant une couche réfléchissante laquelle laisse passer la lumière émise par l'écran plat quand celui-ci est allumé et forme un miroir réfléchissant qui cache parfaitement l'écran plat quand celui-ci est éteint.
